# EUROPEAN PATENT APPLICATION

(11) **EP 2 437 089 A1**
(43) Date of publication of application: **04.04.2012**
(21) Application number: 10290520.5
(22) Date of filing: 30.09.2010
(51) Int. Cl.: G02B 6/32, H04B 10/13

(54) **Optical transmission system over multimode fiber using multiple-input-multiple-output (MIMO) techniques**

(71) Applicant: Alcatel Lucent, 75007 Paris (FR)
(72) Inventor: Franz, Bernd, 74336 Brackenheim (DE); Suikat, Detlef, 75395 Ostelsheim (DE)
(74) Representative: MERH-IP Matias Erny Reichl Hoffmann

(57) **Abstract**

The present document relates to an optical transmission system using multimode fibers. In particular, the present document relates to a method and system for coupling light into and out from multimode fibers. An optical coupling device (302, 304) configured to couple light between an array of light sources (211) or drains (221) and a multi-mode fiber (130) is described. The device comprises an array of first interfaces adapted to connect with the array of light sources (211) or drains (221), respectively; a second interface adapted to connect with the multi-mode fiber (130); an array of first lenses (401, 412), wherein a front side of each lens of the array of first lenses (401, 412) faces a corresponding first interface of the array of first interfaces; and a second lens (402, 412) at a backside of the array of first lenses (401,412) facing the second interface.

## Description

The present document relates to an optical transmission system using multimode fibers. In particular, the present document relates to a method and system for coupling light into and out from multimode fibers performing spatial multiplex.

Multi-mode fibers (MMF) exhibit a higher transport capacity limit than single-mode fibers (SMF), provided the various optical modes can be exploited as independent communication channels with individual scattering paths. It is a technical problem to find economical and efficient means to couple the light from a number M of transmitters to the MMF and from the MMF to a number N of receivers. Furthermore, it is a technical problem to recover the transmitted data using MIMO (multiple input multiple output) processing techniques. Typically, the transmitters and receivers are equipped with single-mode fibers, such that a technical problem is to provide a method and device for coupling the light of M SMFs into a MMF (at the transmitter side), as well as for coupling the light of the MMF to N SMFs (at the receiver side).

According to an aspect an optical coupling device configured or adapted to couple light between an array of light sources or drains and a multi-mode fiber is described. In other words, the optical coupling device may be configured to connect an array of light sources or drains with a multi-mode fiber. The optical coupling device may be or may be part of an optical transmitter or an optical receiver of an optical transmission system.

The optical coupling device may be configured to couple the light to or from different optical modes of the multi-mode fiber. The light sources or drains may be single-mode fibers or alternatively photonic transmitters and photonic receivers, respectively. As such, the coupling device may be configured or adapted to couple light between the modes of a plurality of single-mode fibers and the various modes of a multi-mode fiber. In particular, the coupling device may be configured or adapted to couple the light of M SMFs into the various modes of an MMF. Alternatively, the coupling device may be configured or adapted to couple the light of the various modes of an MMF into a plurality of N SMFs.

The device may comprise an array of first lenses interfacing at a front side with the array of light sources or drains. In an embodiment, the front side of the array of first lenses is facing the array of light sources or drains. Typically, each lens of the array of first lenses interfaces with and/or faces a corresponding source or drain of the array of light sources or drains. The number of lenses in the array of first lenses may be equal to the number of sources of drains in the array of light sources or drains. Furthermore, the axis of the lenses of the array of first lenses may be aligned with the corresponding sources or drains. In particular, the axis of the lenses of the array of first lenses may be aligned with the axis of the core of the corresponding single-mode fibers acting as a light sources or light drains. In other words, the axis of the lenses of the array of first lenses may be perpendicular to the surface of the corresponding light sources or light drains, e.g. the endface of the corresponding single-mode fibers.

The lenses of the array of first lenses may form a two dimensional array of lenses which are laterally spaced with respect to one another. This two dimensional array of first lenses may face the array of laterally spaced light sources or drains, such that each lens of the array of first lenses is facing its corresponding light source or light drain. The lenses may be arranged such that an axis of a lens of the array of first lenses is aligned with an axis of the corresponding source or drain of the array of light source or drains. In particular, the lens and the corresponding source or drain may share a common axis.

The alignment of the array of light sources or light drains with the array of first lenses may involve the alignment of the axis and the distance of the array of light sources or drains and the array of first lenses. Such an alignment may be provided by an array of first interfaces corresponding to the array of light sources or drains. A first interface may be adapted to maintain its corresponding light source or drain in an appropriate first spatial position, e.g. in a position aligning the axis of the first lens and the axis of a corresponding single-mode fiber and/or in a position allowing for an appropriate focusing or collimating.

In other words, the optical coupling device may comprise an array of first interfaces (e.g. first connectors or appropriate plugs) adapted to connect with the array of light sources or drains, respectively. In particular, the device may provide a dedicated first interface for each light source or light drain of the array of light sources or drains. The array of first interfaces may be adapted to maintain or fix the array of light sources or drains at first spatial positions which are associated with the focal lengths of the array of first lenses. In particular, a first interface may fix a light source or drain such that the corresponding first lens may collimate light from the light source or focus light onto the light drain. In case the sources or drains are single-mode fibers, the array of first interfaces may be adapted to maintain the array of single-mode fibers at first spatial positions such that the array of first lenses focuses light onto or collimates light from an endface of the core of the corresponding single-mode fiber. This may involve appropriate positioning with regards to the axis of the first lens and the corresponding single-mode fiber and/or with regards to the distance between the first lens and the corresponding single-mode fiber.

The lenses of the array of first lenses may have a convex surface facing the corresponding light sources or drains. Furthermore, the lenses of the array of first lenses may have a common planar backside opposite of their convex surface. As such, each lens of the array of first lenses may be adapted to focus light onto the corresponding drain or collimate light from the corresponding source. The focal length of the lens may be adapted accordingly. In an embodiment, the surfaces of the light sources or light drains, e.g. the endfaces of an array of SMFs, form a common plane. In such case, the focal length of the different lenses of the array of first lenses may be the same.

In case the array of light sources or drains corresponds to an array of single-mode fibers, each lens of the array of first lenses may be adapted to focus light onto or collimate light from the endface of the core of the corresponding single-mode fiber. In case the array of light sources or drains corresponds to an array of photonic transmitters or an array of photonic receivers, each lens of the array of first lenses may be adapted to focus light onto the active surface of the corresponding photonic receiver or collimate light from the active surface of the corresponding photonic transmitter. The focal length of the lenses of the array of first lenses may be adapted accordingly.

In other words, the array of first interfaces may be adapted to fix the array of light sources or drains at first spatial positions, respectively. In such cases, each lens of the array of first lenses, facing a corresponding first interface, may be adapted to focus light onto the corresponding first spatial position or collimate light from the corresponding first spatial position. In an embodiment, the array of light sources or drains is an array of single-mode fibers, and a first interface of the array of first interfaces is adapted to fix an endface of (a core of) a single-mode fiber of the array of single-mode fibers at the first spatial positions. In another embodiment, the array of light sources or drains is an array of photonic transmitters or an array of photonic receivers, and a first interface of the array of first interfaces is adapted to fix an active surface of the corresponding photonic receiver or the corresponding photonic transmitter at the first spatial position, The first spatial positions may be associated with the focal lengths of the array of first lenses.

The device may comprise a second lens at the backside of the array of first lenses interfacing with and/or facing the endface of the multi-mode fiber. The second lens may have a planar surface facing the common planar backside of the lenses of the array of first lenses. Furthermore, the second lens may have a convex surface facing the endface of the multi-mode fiber. As such, the second lens may be adapted to collimate light from the endface of the multi-mode fiber or focus light onto the endface of the multi-mode fiber. In particular, the second lens may be adapted to focus light onto or collimate light from the endface of the core of the multi-mode fiber. In an embodiment, the focal length of the second lens is adapted to focus light onto or collimate light from a significant portion (e.g. the entire area) of the endface of the core of the multi-mode fiber. By doing this, light can be coupled to or from the various modes of the multi-mode fiber.

The axis of the second lens may be aligned with the axis of the multi-mode fiber. Furthermore, the second lens may be positioned at a certain distance from the multi-mode fiber in order to allow for the appropriate focusing and/or collimating of the light. For this purpose a second interface may be provided, wherein the second interface is adapted to connect the multi-mode fiber and to maintain the multi-mode fiber at an appropriate second spatial position with regards to the second lens.

In other words, the optical coupling device may comprise a second interface (e.g. a second connector or an appropriate plug) adapted to connect with the multi-mode fiber. The second interface may be adapted to maintain the multi-mode fiber at a second spatial position associated with a focal length of the second lens. In particular, the second interface may be adapted to fix the multi-mode fiber at a second spatial position such that the second lens focuses light onto or collimates light from the endface of the core of the multi-mode fiber. This may involve appropriate positioning with regards to the axis of the second lens and the multi-mode fiber and/or with regards to the distance between the second lens and the multi-mode fiber.

In yet other words, the second interface may be adapted to fix an endface of the multi-mode fiber at the second spatial position. The second lens, facing the second interface, may be adapted to collimate light from the second spatial position or focus light onto the second spatial position. In an embodiment, the second interface is adapted to fix the endface of a core of the multi-mode fiber at the second spatial position, thereby allowing the second lens to collimate light from the core or focus light onto the core. The second spatial position may be associated with a focal length of the second lens.

The array of first lenses and the second lens may be arranged such that the planar surface of the second lens and the common planar backside of the lenses of the array of first lenses are merged. As such, there may be no gap, e.g. an air gap, between the lenses of the array of first lenses and the second lens.

According to a further aspect, the usage of a Shack-Hartmann lens-array comprising a two dimensional array of first lenses is described. The usage may comprise the coupling of light between an array of light sources or drains and a multi-mode fiber. In particular, the usage may comprise the coupling of light between a plurality of modes of the multi-mode fiber and the modes of an array of single-mode fibers. The coupling may be performed according to and/or using any of the features and aspects outlined in the present document.

According to another aspect, an optical transmission system is described. The optical transmission system may comprise a multi-mode fiber adapted to transmit a first and a second optical mode. In general terms, the multi-mode fiber may be adapted to transmit a plurality of optical modes. In addition, the system may comprise a first and a second optical source or a first and second optical drain, wherein the source or the drain may comprise, e.g. carry, a first and a second optical signal, respectively. As outlined above, the sources and/or drains may be single-mode fibers, such that the first and second optical signals may be carried by the single modes of the respective single-mode fibers.

The optical transmission system may comprise an optical coupling device according to any of the aspects and features outlined in the present document. If the system comprises light sources, the coupling device may be adapted to couple the first and second optical signal from the optical sources to the first and second optical mode of the multi-mode fiber. In other words, the first and second optical signal from the optical sources may be coupled to the plurality of optical modes of the multi-mode fiber. In particular, the first and second optical signal may excite different sets (e.g. subsets) of the plurality of optical modes of the multi-mode fiber. If the system comprises light drains, the coupling device may be adapted to couple light from the first and second optical mode of the multi-mode fiber to the first and second optical signal of the first and second optical drain. In other words, light from the plurality of optical modes of the multi-mode fiber may be coupled into the modes of the first and second optical drains, respectively. In particular, the light of the first and second optical signal of the first and second optical drain may be coupled in from different sets of the plurality of optical modes of the multi-mode fiber.

The coupling may be such that the first optical signal is coupled to / from the first mode of the multi-mode fiber and the second optical signal is coupled to/ from the second mode of the multi-mode fiber. However, there may be a mixing between the first and second signals and the first and second modes. in an embodiment, the coupling matrix between the first and second signal and the first and second mode is nonsingular, e.g. unitary. In other words, the coupling may occur between the first and second signals and different sets or different combinations or different groups of the plurality of modes of a multi-mode fiber, thereby providing coupling diversity.

According to a further aspect, a method for coupling light from an array of laterally spaced light sources to a multi-mode fiber is described. The method may comprise the step of collimating the light coming from the array of laterally spaced light sources using an array of laterally spaced first lenses. Each lens of the array of first lenses may correspond to a source of the array of light sources. The method may proceed in focusing the collimated light coming from the array of laterally spaced light sources onto an endface of the multi-mode fiber using a second lens at a backside of the array of first lenses. Each light source may address another region of the MMF endface and thus may excite different sets of the plurality of optical modes within the MMF.

in the opposite direction, the method may be used for coupling light from a multi-mode fiber to an array of laterally spaced light drains. In this case, the method may comprise the step of collimating the light coming from an endface of the multi-mode fiber using a second lens. The method may proceed in focusing the collimated light coming from the endface of the multi-mode fiber onto the array of laterally spaced light drains using an array of laterally spaced first lenses at a backside of the second lens. Each lens of the array of first lenses may correspond to a drain of the array of light drains. Typically, each light drain gets its light from a different part of the MMF endface.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein
Fig. 1 illustrates an example optical MMF transmission system using multiple-input multiple-output techniques;
Fig. 2a shows example spatial paths in a multi-mode fiber;
Fig. 2b shows an example setup for the coupling in and coupling out of a mode of a multi-mode fiber;
Fig. 3 illustrates an example optical MMF transmission system using a coupling device as outlined in the present document; and
Figs. 4 (a) and (b) illustrate example coupling devices as outlined in the present document.

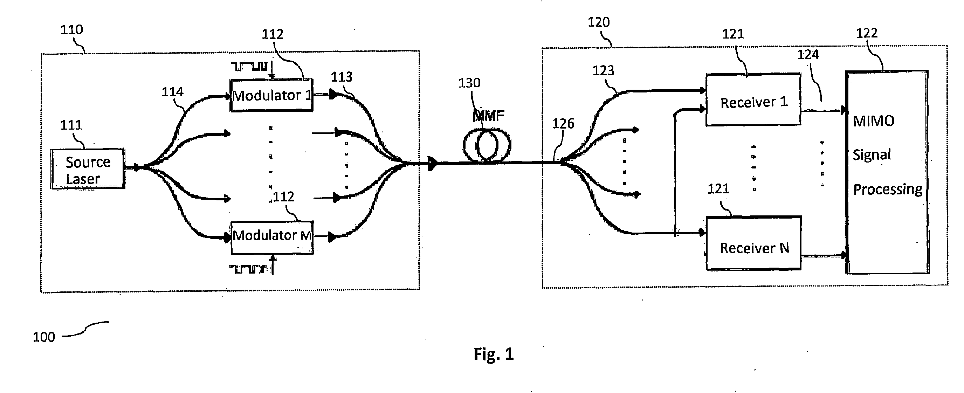

In Fig.1 an optical transmission system 100 comprising a multi-mode transmitter 110 and a multi-mode receiver 120 is illustrated. This optical transmission system 100 enables the transport of a plurality of optical signals at the same wavelength over a MMF 130. The multi-mode transmitter 110 comprises a source laser 111 which provides an optical carrier signal 114. The optical carrier signal 114 is modulated separately by a set of M modulators 112, thereby providing M differently modulated optical signals 113. These differently modulated optical signals 113 are coupled to different modes of the MMF 130.

At a respective multi-mode receiver 120, the received optical signal 126 is coupled out into N received optical signals 123. These N received optical signals 123 are detected by N receivers 121, e.g. coherent receivers, at the output of the MMF 130. It should be noted that the number N of separately received optical signals 123 may be different from the number M of modulated optical signals 113. In an embodiment, however, M and N are equal.

The N receivers 121 provide N digitized received signals 124. These digitized received signals 124 are jointly submitted to MIMO (multiple-input multiple-output) processing 122 in order to numerically isolate the information transmitted at the multi-mode transmitter 110 within the M modulated optical signals 113. For this purpose MIMO detection schemes, e.g. schemes which are already known from wireless or wireline transmission systems, may be used.

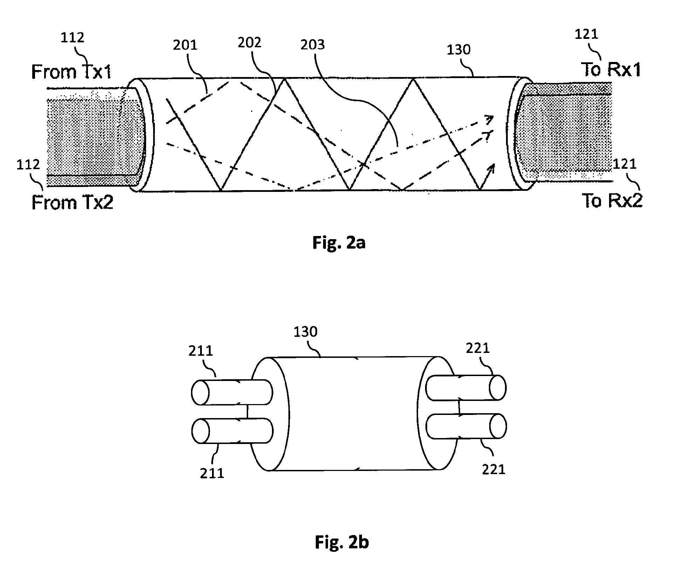

Fig. 2a illustrates different spatial paths 201, 202 and 203 in the multi-mode fiber 130. Typically, light travelling in an optical fiber forms so-called hybrid-type modes which are modes with nonzero electric and magnetic fields in the direction of propagation. Commonly, groups of the exact hybrid-type modes are formed, with the modes of each group exhibiting practically the same group velocity. In a weakly guiding communication fiber the superposition of the exact modes in each group is linear polarized. These superpositions of modes are themselves treated as fiber modes and they are usually referred to as quasi LP (linear polarization) modes LP_{m,nu,} wherein m and nu are integers which denote the particular mode. The mode LP_{0,1} refers to the basic mode. Conventional MMFs 130 can carry approximately 50 modes or more. For very long fiber links, the slight velocity differences of the exact modes, i.e. the hybrid-type modes, become visible and the grouping to LP modes may become meaningless. In the context of this document the term "modes" denotes "LP modes" and/or "exact modes", depending on the fiber link length of the transmission system.

The multi-mode transmission characteristics of the transmission system 100 (including the coupling in / out of the different modes of the MMF 130) may be described by a transfer function H which is a matrix with N rows and M columns. The transfer function specifies the transformation of the M modulated optical signals 113 into N received optical signals 123. In an ideal scenario for a high number of fiber modes, the elements of H will have a complex Gaussian distribution, with Rayleigh distribution for their amplitude and uniform distribution for their phase. Furthermore, if independent sets of modes are excited by the M SMF-MMF couplings at the multi-mode transmitter 110 and if the N received optical signals 123 are detected independently via the N MMF-SMF couplings at the multi-mode receiver 120, then the elements of H will be independent as well. If these conditions are met, a theoretical maximum capacity of the MIMO system may be achieved, which is N times the capacity of a single-mode.

The optical transmission channels formed by the different spatial modes of the MMF 130 may change statistically due to phase drifts and due to cross-coupling between the modes which may be induced by fiber bending (e.g. micro bending). These drifting channel conditions lead to drifting inter channel interference (ICI). Nevertheless, it can be shown that this drifting ISI can be equalized by the electronic MIMO processing 122 within the receiver 120 provided that the originating physical effects can be described by unitary matrices (except for phase and amplitude factors common for all modes) which formulate the amplitude transfer between the optical signal amplitudes transported in the different MMF modes. In this case, the receiver 120 can demultiplex all channels without significant loss, i.e, the transmission quality remains stable, even though mode mixing has occurred.

in an optimum case, the number M of transmitters is equal to the number N of receivers and the number of participating fiber modes. In this case, the transfer matrix H becomes unitary after factoring out common phase and amplitude transfer factors, and can be inverted by the MIMO processing 122 within the receiver 120 without loss of capacity. I.e. the channels can be demultiplexed without penalty irrespective of phase distribution and mode coupling (e.g. micro bending) during the propagation along the fiber.

As outlined above, a strong deviation from the nonsingular, e.g. unitary, condition of H should be avoided. This means that correlation between the channel elements leading to a lower rank of the transfer function H should be avoided in order to increase the throughput of the transmission system 100. Such correlation may be a result of the fact that some common guiding modes are excited by the different SMF-MMF couplings violating the nonsingular and/or unitary condition at the multi-mode transmitter 110. Therefore, the launching conditions should be controlled in order to reduce the dependency between the channel elements of the transfer function H and in order to increase the achievable bitrate, i.e. the spectral efficiency of the transmission system 100.

In view of the above, particular emphasis has to be put on the couplers at the transmitter and the receiver side. These couplers should be configured or adapted to couple light from a plurality of SMFs 211 into the various modes of a MMF 130 as shown in Fig. 2b. At the receiver side, the couplers should be configured to couple light from the various modes of the MMF 130 to the plurality of SMFs 221. The coupling in / from the various modes of the MMF 130 can be performed by coupling the light at different laterally spaced positions across the endface of the core of the MMF 130. The exact coupling positions on the endface of the MMF 130 have to be controlled, in order to provide nonsingular, preferably near unitary, coupling matrices. In the following, a coupling device will be described which allows controlling the coupling positions on the endface of the MMF 130.

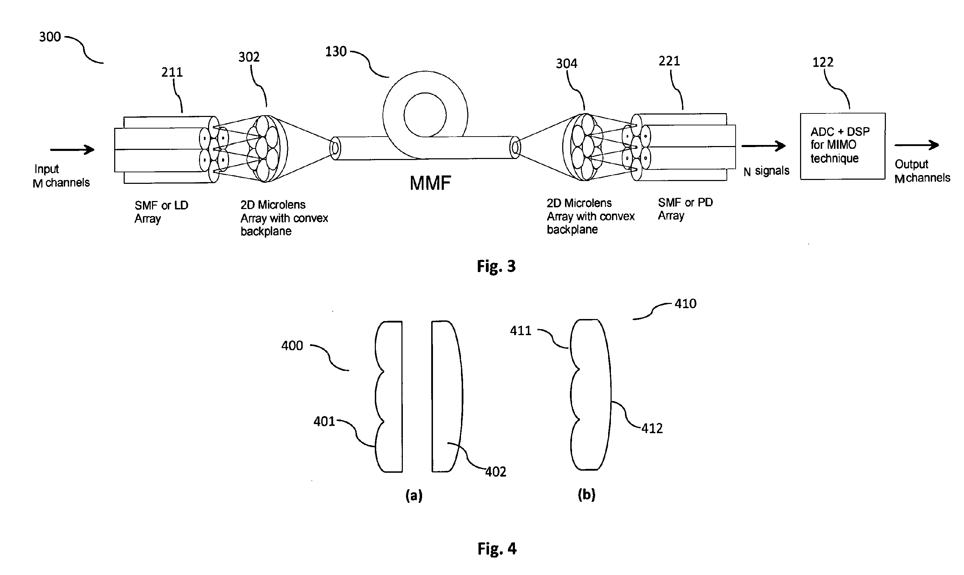

In Fig. 3 a transmission network 300 is illustrated, which comprises couplers 302, 304 which may be used to control the coupling positions. M communication channels are provided by M SMFs 211 carrying M optical signals at the transmitter side. These M optical signals are coupled to different modes of the MMF 130 using the coupling device 302. For this purpose, the M optical signals corresponding to the M SMFs 211 are projected to different laterally spaced positions on the endface of the MMF 130, in particular to different laterally spaced position on the endface of the core of the MMF 130. As a result of the lateral spacing, the M optical signals are coupled to a different combination of modes of the MMF 130.

The coupling device 302 may comprise a convex portion facing the SMFs 211. In particular, the coupling device 302 may comprise an array of M convex lenses facing the M SMFs 211, respectively. This is illustrated in Figs. 4a, 4b, where coupling devices 400, 410 are depicted schematically. It can be seen that the coupling devices 400, 410 comprise an array of three lenses 401, 411, wherein a convex surface of the lenses is facing corresponding endfaces of three SMFs 211. The array of lenses 401 depicted in Fig. 4a may be referred to as a Hartmann-Shack or Shack-Hartmann sensor. Typically, the focal length of the array of lenses is equal for all lenses.

The coupling device 302 may further comprise a convex portion facing the MMF 130. In particular, the coupling device may comprise a single convex lens facing the single MMF 130, wherein the convex lens is adapted to focus light onto the endface of the MMF 130. This is illustrated in further detail in Figs. 4a, 4b where the coupling devices 400, 410 comprise convex lenses 402, 412, respectively. The convex lens 402, 412 is adapted to focus the light coming from the array of lenses 401, 402 onto the endface of the (core of the) MMF 130.

The coupling devices 400, 410 which are shown schematically in Figs. 4a, 4b differ in that in the coupling device 400, the array of convex lenses 401 and the single convex lens 402 are spaced by an air gap, wherein in the coupling device 410, the array of convex lenses 411 are merged into a single optical device with the convex lens 412. Overall, the coupling devices 302, 400, 410 are configured to focus the light coming from M SMFs 211 onto the endface of the MMF 130. This may be achieved by providing on the input side an array of convex lenses 401, 411 corresponding to and facing the M SMFs 211 and by providing on the output side a convex lens 402, 412 corresponding to and facing the MMF 130.

In other words, a two dimensional array of lenses 401, 412 is used to collimate the incoming light from the M SMFs 211. The backside 402, 412 of this array 401, 412 is formed in such way, that the outcoming light is concentrated onto the MMF 130 core surface. In this way, the different lightspots from the SMFs 211 (or alternatively from an array of photonic transmitters) are distributed as a speckle pattern over the surface of the (core of the) MMF 130, resulting in a different combination of optical modes of the MMF 130 for each SMF spot.

At the end of the multi-mode fiber 130 the same (inverted) optical device 304 will distribute the speckle pattern over an array of N SMFs 221 or alternatively over an array of photo receivers. I.e. at the output side of the MMF 130 a coupling device 304 may be provided which comprises a convex surface 402, 412 facing the endface of the MMF 130 and an array of N convex lenses 401, 411 facing the core of the N SMFs 221.

Eventually, the light of the N SMFs 221 is converted into a digital signal using (analog-to-digital converters) ADCs and then submitted to MIMO processing 122 as outlined above. By doing this, the M optical communication channels can be recovered.

Overall, an optical device 302, 304, 400, 410 has been described which is derived from the Hartmann-Shack sensor. The coupling device 302, 400, 410 concentrates the light coming from a number of transmitters or SMFs 211 onto the input of an MMF 130. A similar (inverted) coupling device 304, 400, 410 distributes the speckle pattern at the end of the MMF 130 to a number of receivers or SMFs 221, respectively. The coupling devices 302, 304, 400, 410 allow for coupling in / out different mode groups of the MMF 130, thereby providing a nonsingular, but typically non-unitary, transfer matrix H of the transmission system 100, 300. Therefore MIMO techniques are applied at the receiver in order to separate the transmitted channels, thereby increasing the throughput of the transmission system 100, 300.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. An optical coupling device (302, 304, 400, 410) configured to couple light between an array of light sources (211) or drains (221) and a multi-mode fiber (130), the device (302, 304, 400, 410) comprising:
- an array of first interfaces adapted to connect with the array of light sources (211) or drains (221), respectively;
- a second interface adapted to connect with the multi-mode fiber (130);
- an array of first lenses (401, 412), wherein a front side of each lens of the array of first lenses (401, 412) faces a corresponding first interface of the array of first interfaces; and
- a second lens (402, 412) at a backside of the array of first lenses (401,412) facing the second interface.

2. The device (302, 304, 400, 410) of claim 1, wherein
- the lenses of the array of first lenses (401, 412) have a convex surface facing the corresponding first interface;
- the lenses of the array of first lenses (401, 412) have a common planar backside opposite of their convex surface;
- the second lens (402, 412) has a planar surface facing the common planar backside of the lenses of the array of first lenses (401,412); and
- the second lens (402, 412) has a convex surface facing the second interface.

3. The device (302, 304, 400, 410) of claim 2, wherein the planar surface of the second lens (402, 412) and the common planar backside of the lenses of the array of first lenses (401, 412) are merged.

4. The device (302, 304, 400, 410) of any previous claim, wherein
- the array of first interfaces is adapted to fix the array of light sources (211) or drains (221) at first spatial positions, respectively;
- the second interface is adapted to fix an endface of the multi-mode fiber (130) at a second spatial position;
- each lens of the array of first lenses (401, 411) is adapted to focus light onto the corresponding first spatial position or collimate light from the corresponding first spatial position; and
- the second lens (402, 412) is adapted to collimate light from the second spatial position or focus light onto the second spatial position.

5. The device (302, 304, 400,410) of claim 4, wherein
- the second interface is adapted to fix the endface of a core of the multi-mode fiber (130) at the second spatial position.

6. The device (302, 304, 400, 410) of any of claims 4 to 5, wherein
- the array of light sources (211) or drains (221) is an array of single-mode fibers; and
- a first interface of the array of first interfaces is adapted to fix an endface of a corresponding single-mode fiber of the array of single-mode fibers at the corresponding first spatial position.

7. The device (302, 304, 400, 410) of any of claims 4 to 5, wherein
- the array of light sources (211) or drains (221) is an array of photonic transmitters or an array of photonic receivers; and
- an interface of the array of first interfaces is adapted to fix an active surface of the corresponding photonic receiver or the corresponding photonic transmitter at the corresponding first spatial position.

8. The device (302, 304, 400, 410) of any of claims 4 to 7, wherein
- the first spatial positions are associated with focal lengths of the array of first lenses (401, 412); and
- the second spatial position is associated with a focal length of the second lens (402, 412).

9. The device (302, 304, 400, 410) of any previous claim, wherein
- the lenses of the array of first lenses (401, 412) form a two dimensional array of lenses which are laterally spaced with respect to one another;
- a first interface of the array of first interfaces is adapted to align an axis of the corresponding lens of the array of first lenses (401, 412) with the corresponding source or drain of the array of light sources (211) or drains (221).

10. The device (302, 304, 400, 410) of any previous claim, wherein the number of lenses in the array of first lenses (401, 412), the number of first interfaces in the array of first interfaces and the number of sources or drains in the array of light sources (211) or drains (221) are equal.

11. The device (302, 304, 400, 410) of any previous claim, wherein the lenses in the array of first lenses (401, 412) have substantially the same focal length.

12. An optical transmission system comprising:
- a multi-mode fiber (130) adapted to transmit a first and a second optical mode;
- a first and a second optical source (211) or a first and second optical drain (221), comprising a first and a second optical signal, respectively; and
- an optical coupling device (302, 304, 400, 410) according to any of claims 1 to 11, configured to couple the first and second optical signal from the optical source (211) to the first and second optical mode of the multi-mode fiber (130) or to couple light from the first and second optical mode of the multi-mode fiber (130) to the first and second optical signal of the first and second optical drain (221).

13. A method for coupling light from an array of laterally spaced light sources (211) to a multi-mode fiber (130), the method comprising:
- collimating the light coming from the array of laterally spaced light sources (211) using an array of laterally spaced first lenses (401, 411), each lens of the array of first lenses (401, 411) corresponding to a source of the array of light sources (211); and
- focusing the collimated light coming from the array of laterally spaced light sources (211) onto an endface of the multi-mode fiber (130) using a second lens (402, 412) at a backside of the array of first lenses (401, 411).

14. A method for coupling light from a multi-mode fiber (130) to an array of laterally spaced light drains (221), the method comprising:
- collimating the light coming from an endface of the multi-mode fiber (130) using a second lens (402, 412); and
- focusing the collimated light coming from the endface of the multi-mode fiber (130) onto the array of laterally spaced light drains (221) using an array of laterally spaced first lenses (401, 411) at a backside of the second lens (402, 412), each lens of the array of first lenses (401, 411) corresponding to a drain of the array of light drains (211).

## Amended claims

### Amended claims in accordance with Rule 137(2) EPC.

**1.** An optical coupling device (302, 304, 400, 410) configured to couple light between an array of light sources (211) or drains (221) and a multi-mode fiber (130), the device (302, 304, 400, 410) comprising:
- an array of first interfaces adapted to connect with the array of light sources (211) or drains (221), respectively;
- a second interface adapted to connect with the multi-mode fiber (130);
- an array of first lenses (401, 412), wherein a front side of each lens of the array of first lenses (401, 412) faces a corresponding first interface of the array of first interfaces; and
- a second lens (402, 412) at a backside of the array of first lenses (401, 412) facing the second interface;
wherein the optical coupling device (302, 304, 400, 410) is configured to project light from the array of light sources (211) to different laterally spaced positions on an endface of the multi-mode fiber (130) such that light from the array of light sources (211) is coupled to different combinations of modes of the multi-mode fiber (130), respectively, or to project light from the different laterally spaced positions on the endface of the multi-mode fiber (130) to the array of drains (221) such that light from the different combinations of modes of the multi-mode fiber (130) is coupled to the array of light drains (221), respectively.

**2.** The device (302, 304, 400, 410) of claim 1, wherein
- the lenses of the array of first lenses (401, 412) have a convex surface facing the corresponding first interface;
- the lenses of the array of first lenses (401, 412) have a common planar backside opposite of their convex surface;
- the second lens (402, 412) has a planar surface facing the common planar backside of the lenses of the array of first lenses (401, 412); and
- the second lens (402, 412) has a convex surface facing the second interface.

**3.** The device (302, 304, 400, 410) of claim 2, wherein the planar surface of the second lens (402, 412) and the common planar backside of the lenses of the array of first lenses (401, 412) are merged.

**4.** The device (302, 304, 400, 410) of any previous claim, wherein
- the array of first interfaces is adapted to fix the array of light sources (211) or drains (221) at first spatial positions, respectively;
- the second interface is adapted to fix the endface of the multi-mode fiber (130) at a second spatial position;
- each lens of the array of first lenses (401, 411) is adapted to focus light onto the corresponding first spatial position or collimate light from the corresponding first spatial position; and
- the second lens (402, 412) is adapted to collimate light from the second spatial position or focus light onto the second spatial position,

**5.** The device (302, 304, 400, 410) of claim 4, wherein
- the second interface is adapted to fix the endface of a core of the multi-mode fiber (130) at the second spatial position.

**6.** The device (302, 304, 400, 410) of any of claims 4 to 5, wherein
- the array of light sources (211) or drains (221) is an array of single-mode fibers; and
- a first interface of the array of first interfaces is adapted to fix an endface of a corresponding single-mode fiber of the array of single-mode fibers at the corresponding first spatial position.

**7.** The device (302, 304, 400, 410) of any of claims 4 to 5, wherein
- the array of light sources (211) or drains (221) is an array of photonic transmitters or an array of photonic receivers; and
- an Interface of the array of first interfaces is adapted to fix an active surface of the corresponding photonic receiver or the corresponding photonic transmitter at the corresponding first spatial position.

**8.** The device (302, 304, 400, 410) of any of claims 4 to 7, wherein
- the first spatial positions are associated with focal lengths of the array of first lenses (401, 412); and
- the second spatial position is associated with a focal length of the second lens (402, 412).

**9.** The device (302, 304, 400, 410) of any previous claim, wherein
- the lenses of the array of first lenses (401, 412) form a two dimensional array of lenses which are laterally spaced with respect to one another;
- a first interface of the array of first interfaces is adapted to align an axis of the corresponding lens of the array of first lenses (401, 412) with the corresponding source or drain of the array of light sources (211) or drains (221).

**10.** The device (302, 304, 400, 410) of any previous claim, wherein the number of lenses in the array of first lenses (401, 412), the number of first interfaces in the array of first interfaces and the number of sources or drains in the array of light sources (211) or drains (221) are equal.

**11.** The device (302, 304, 400, 410) of any previous claim, wherein the lenses in the array of first lenses (401, 412) have substantially the same focal length.

**12.** An optical transmission system comprising:
- a multi-mode fiber (130) adapted to transmit a first and a second optical mode;
- a first and a second optical source (211) or a first and second optical drain (221), comprising a first and a second optical signal, respectively; and
- an optical coupling device (302, 304, 400, 410) according to any of claims 1 to 11, configured to couple the first and second optical signal from the optical source (211) to the first and second optical mode of the multi-mode fiber (130) or to couple light from the first and second optical mode of the multi-mode fiber (130) to the first and second optical signal of the first and second optical drain (221).

**13.** A method for coupling light from an array of laterally spaced light sources (211) to a multi-mode fiber (130), the method comprising:
- collimating the light coming from the array of laterally spaced light sources (211) using an array of laterally spaced first lenses (401, 411), each lens of the array of first lenses (401, 411) corresponding to a source of the array of light sources (211); and
- focusing the collimated light coming from the array of laterally spaced light sources (211) onto different laterally spaced positions on an endface of the multi-mode fiber (130) using a second lens (402, 412) at a backside of the array of first lenses (401, 411), such that light from the array of light sources (211) is coupled to different combinations of modes of the multi-mode fiber (130), respectively.

**14.** A method for coupling light from a multi-mode fiber (130) to an array of laterally spaced light drains (221), the method comprising:
- collimating the light coming from different laterally spaced positions on an endface of the multi-mode fiber (130) using a second lens (402, 412); and
- focusing the collimated light coming from the endface of the multi-mode fiber (130) onto the array of laterally spaced light drains (221) using an array of laterally spaced first lenses (401, 411) at a backside of the second lens (402, 412), each lens of the array of first lenses (401, 411) corresponding to a drain of the array of light drains (211), such that light from different combinations of modes of the multi-mode fiber (130) is coupled to the array of light drains (221), respectively.
